# EUROPÄISCHE PATENTSCHRIFT

(11) **EP 2 745 024 B1**
(45) Veröffentlichungstag und Bekanntmachung des Hinweises auf die Patenterteilung: **19.10.2016**
(21) Anmeldenummer: 12759631.0
(22) Anmeldetag: 26.07.2012
(51) Int. Cl.: F16D 1/10

(54) **KLAUENKUPPLUNG**
JAW CLUTCH
EMBRAYAGE À CRABOT

(30) Priorität: 17.08.2011 DE 102011081078
(43) Veröffentlichungstag der Anmeldung: 25.06.2014
(73) Patentinhaber: Schaeffler Technologies AG & Co. KG, 91074 Herzogenaurach (DE)
(72) Erfinder: LORENZ, Elmar, 77836 Rheinmünster Söllingen (DE)
(86) Internationale Anmeldenummer: PCT/DE2012/000756
(87) Internationale Veröffentlichungsnummer: WO 2013/023636

(56) Entgegenhaltungen:
- EP-A1- 1 862 684
- WO-A1-2009/029574
- WO-A2-2008/034431
- DE-A1- 2 062 414
- DE-A1- 19 506 517
- DE-A1-102006 048 653
- FR-A- 1 547 663

## Beschreibung

Die Erfindung betrifft eine klauenartige Anbindung oder Kupplung, mit dessen Hilfe eine erste Welle mit einer zweiten Welle gekoppelt werden kann.

Es ist bekannt eine mit einer Brennkraftmaschine eines Kraftfahrzeugs verbundene Kurbelwelle über eine flexible Platte oder eine starre Platte mit einem Zweimassenschwungrad (ZMS) zu koppeln, wobei das Zweimassenschwungrad mit einer Getriebekupplung zum Kuppeln der Kurbelwelle mit einer Getriebeeingangswelle eines Kraftfahrzeuggetriebes verbunden ist. Hierzu wird die Platte mit der Kurbelwelle verschraubt, die Kurbelwelle relativ zur Kupplung ausgerichtet und danach die Platte mit dem Zweimassenschwungrad verschraubt oder vernietet. Eine solche Verbindung zwischen einer Antriebsseite und einer Getriebeseite wird z.B. in der WO 2008/034431 offenbart.

Es besteht ein ständiges Bedürfnis den Montageaufwand zum Koppeln einer Antriebswelle mit einer Getriebekupplung zu reduzieren. Ferner ist es wünschenswert, eine lösbare Kurbelwellenanbindung zu schaffen, die nahezu spielfrei über das gesamte Schubmoment und Drehzahlband bleibt und somit nicht ab einem gewissen Schubmoment zum Rasseln neigt.

Die Aufgabe der Erfindung ist es, Maßnahmen aufzuzeigen, mit deren Hilfe eine lösbare und nahezu spielfreie Koppelung einer Antriebswelle eines Kraftfahrzeugs mit einer Getriebekupplung ermöglicht ist.

Die Lösung dieser Aufgabe erfolgt erfindungsgemäß durch eine klauenartige Anbindung oder Kupplung mit den Merkmalen des Anspruchs 1. Bevorzugte Ausgestaltungen der Erfindung sind in den Unteransprüchen angegeben.

Erfindungsgemäß ist eine Klauenkupplung zur Verbindung einer Antriebswelle eines Kraftfahrzeugmotors mit einer im Antriebsstrang nachgelagerten Baueinheit, insbesondere Drehschwingungsdämpfer, Drehmomentwandler oder Getriebekupplung, vorgesehen mit einer mit der Antriebswelle verbindbaren Eingangsnabe zum Einleiten eines Drehmoments und einer mit der nachgelagerten Baueinheit verbindbaren Ausgangsnabe zum Ausleiten des Drehmoments, wobei die Eingangsnabe mindestens ein Eingangselement zur Übertragung des Drehmoments in Umfangsrichtung auf mindestens ein Ausgangselement der Ausgangsnabe aufweist. Die erfindungsgemäße Kupplung ist gekennzeichnet durch einen Sperrkörper, der zwischen gegenüberliegenden Flanken der Eingangs- und Ausgangselemente drückt beziehungsweise gedrückt wird, um eine spielfreie Verbindung in Umfangsrichtung zwischen der Eingangsnabe und der Ausgangsnabe zu erzeugen. Der Sperrkörper ist angeordnet zwischen diesen gegenüberliegenden Flanken der Eingangs- und Ausgangselemente und drückt gegen sie. Dabei übt der Sperrkörper eine Kraft auf diese Flanken aus, welche die Eingangs- und Ausgangselemente der Klauenkupplung in einem spielfreien Verhältnis zueinander hält.

Die erfindungsgemäße Kupplung ermöglicht eine spielfreie lösbare Kurbelwellenanbindung, mit der eine Antriebswelle mit einer im Momentenfluss nachfolgenden Baueinheit, beispiels-weise einem Eingangsflansch eines Getriebes, gekoppelt werden kann. Diese soll es ermöglichen, ein Getriebe mit einer sich im Nassraum befindlichen Dämpfereinheit zu konstruieren.

In der erfindungsgemäßen Kupplung bilden die gegenüberliegenden Flanken der Eingangs- und Ausgangselemente einen Spalt oder Kanal, der sich in radialer Richtung nach außen hin verjüngt. Somit kann sich der Sperrkörper in radialer Richtung nach außen hin zwischen den Flanken verkeilen, um nahezu sämtliches Spiel zwischen den Eingangs- und Ausgangselementen aus der Kupplung zu nehmen. Während sich die Kupplung im Einsatz dreht, wird der Sperrkörper einer Fliehkraft ausgesetzt, die ihn in radialer Richtung nach außen in den sich verjüngenden Spalt oder Kanal zwischen den Flanken hineindrückt, so dass sich die spielfreie Verbindung mit zunehmender Drehzahl verfestigt. Vorzugsweise ist der Sperrkörper ohnehin in radialer Richtung nach außen hin vorgespannt, beispielsweise mittels einer Feder, so dass der Sperrkörper zwischen den gegenüberliegenden Flanken der Eingangs- und Ausgangselemente gedrückt wird. In einer bevorzugten Ausführungsform haben die gegenüberliegenden Flanken der Eingangs- und Ausgangselemente ebene Flächen, obwohl gewölbte Flächen ebenfalls vorstellbar sind. Die gegenüberliegenden Flanken sind relativ zueinander spitzwinkelig angewinkelt, um den beispielsweise konisch sich verengenden Spalt oder Kanal zu bilden.

In der erfindungsgemäßen Kupplung hat der Sperrkörper eine in Umfangsrichtung weisende konkave Kontur zum Anliegen an den gegenüberliegenden Flanken der Eingangs- und Ausgangselemente. Vorzugsweise ist die konkave Kontur des Sperrkörpers im Wesentlichen rund, wobei der Sperrkörper eine kugelförmige oder zylinderförmige Gestalt aufweist, z.B. wie eine Rolle aus einem Rollenlager. Somit wird der Kontaktbereich zwischen dem Sperrkörper und den Flanken der Eingangs- und Ausgangselemente gering gehalten, beispielsweise nahezu Punkt- oder Linienkontakt, was wiederum eine Lockerung beziehungsweise ein Lösen der verkeilten spielfreien Verbindung der Eingangsnabe und der Ausgangsnabe erheblich erleichtert. Der Sperrkörper besteht vorzugsweise aus einem festen, beständigen und im Wesentlichen gering nachgiebigen Material, wie z.B. Stahl.

In einer bevorzugten Ausführungsform der Erfindung weist die Eingangsnabe eine Mehrzahl von Eingangselementen auf, die vorzugsweise in regelmäßigen Abständen um den Umfang der Eingangsnabe verteilt sind und von denen jedes das Drehmoment in Umfangsrichtung auf ein jeweiliges Ausgangselement überträgt. Vorzugsweise ist ein Sperrkörper zwischen jedem benachbarten Paar der Eingangs- und Ausgangselemente vorgesehen. Auf dieser Weise wird die Übertragung des Drehmoments von der Eingangsnabe auf die Ausgangsnabe über mehrere Eingangs- und Ausgangselemente um den Umfang der Klauenkupplung verteilt.

In einer bevorzugten Ausführungsform der Erfindung liegt das mindestens eine Ausgangselement der Ausgangsnabe in einer jeweiligen Ausnehmung der Eingangsnabe, wobei die Flanke des Eingangselements die Ausnehmung zum Teil abgrenzt. Vorzugsweise erstreckt sich das Ausgangselement zumindest teilweise radial nach außen in die Ausnehmung hinein. Alternativ können die Eingangs- und Ausgangsnaben eine völlig umgekehrte Konfiguration haben, so dass das mindestens eine Eingangselement in einer jeweiligen Ausnehmung der Ausgangsnabe liegt, wobei die Flanke des Ausgangselements die Ausnehmung zum Teil abgrenzt und sich das Eingangselement zumindest teilweise radial nach außen in die Ausnehmung hineinragt.

In einer bevorzugten Ausführungsform der Erfindung weisen die Eingangs- und Ausgangselemente jeweilige Anschlagsflächen auf, die in Umfangsrichtung durch das Einwirken des Sperrkörpers in Kontakt miteinander zur Übertragung des Drehmoments kommen. Dabei ist die Flanke des Eingangselements, gegen welche der Sperrkörper drückt, vorzugsweise auf der Auslaufseite des Eingangselements bezüglich der Drehrichtung, d.h. der Richtung der Drehmomentübertragung. Auf dieser Weise wird das Drehmoment nicht unmittelbar über den Sperrkörper vom Eingangselement auf das jeweilige Ausgangselement übertragen.

Durch die vorzugsweise rollenartigen Sperrkörper ist es möglich das Spiel der Eingangs- und Ausgangsnaben - also, der beiden Klauenhälften der Kupplung - annähernd spielfrei zu gestalten. Dies hat nicht nur den Vorteil, dass die Verbindung nicht zum "rasseln" neigt, sondern auch, dass die Toleranzen der einzelnen Eingangs- und Ausgangsnaben beziehungsweise Klauenhälfte zueinander unkritisch sind, da der Sperrkörper durch eine radial geführte Bahn die Fertigungstoleranzen überbrückt. Hierdurch ist es möglich auch einen größeren Toleranzunterschied zu akzeptieren. Die im Spalt, sich verjüngende Bahn des Sperrkörpers kann entsprechend der möglichen Federkräfte ausgelegt werden.

Die Verriegelung der Eingangs- und Ausgangsnaben beziehungsweise der Klauenhälfte erfolgt bei der Montage. Hier werden beim Fügen von Motor und Getriebe die Vorspannungsfederelemente betätigt - also, gedrückt - und durch ein Abrollen über die am rollenartigen Sperrkörper aufsitzenden Flanken freigegeben. Durch die vorgespannten Federkräfte werden dann die rollenartigen Sperrkörper radial nach außen geschoben und gleichen somit das unterschiedliche Spiel zwischen den beiden Naben beziehungsweise Klauen aus. Dadurch erhöht sich der prozentual tragende Anteil im Schub (oder Zug) auf hundert Prozent.

Die Erfindung betrifft ferner ein Kupplungsaggregat zur Übertragung eines Drehmoments von einer Antriebswelle eines Kraftfahrzeugmotors zu mindestens einer Getriebeeingangswelle eines Kraftfahrzeuggetriebes mit einer Getriebekupplung, insbesondere Doppelkupplung, und einer Klauenkupplung, die wie vorstehend beschrieben aus- und weitergebildet werden kann, wobei die Eingangsnabe der Klauenkupplung mit der Antriebswelle verbindbar ist oder einstückig mit der Antriebswelle ausgeführt ist und die Ausgangsnabe der Klauenkupplung mit der Getriebekupplung verbunden ist oder einstückig mit einem Eingangsflansch der Getriebekupplung ausgeführt ist. Der Eingangsflansch der Getriebekupplung kann insbesondere mit einer Gegenplatte zum Verpressen einer Kupplungsscheibe zwischen der Gegenplatte und einer Anpressplatte verbunden sein oder die Gegenplatte selber als einstückiges Bauteil ausbilden. Bei einer geringen Bauteileanzahl kann eine einfache und schnelle Verbindung der Getriebekupplung mit der Antriebswelle erreicht werden. Dadurch ist eine einfache Koppelung der Antriebswelle eines Kraftfahrzeugs mit der Getriebekupplung ermöglicht.

Desweiteren betrifft die Erfindung ein Kupplungsaggregat zur Übertragung eines Drehmoments von einer Antriebswelle eines Kraftfahrzeugmotors zu mindestens einer Getriebeeingangswelle eines Kraftfahrzeuggetriebes mit einer Getriebekupplung, insbesondere Doppelkupplung, einem mit der Getriebekupplung verbundenen Drehschwingungsdämpfer, insbesondere Zweimassenschwungrad, und einer Klauenkupplung, die wie vorstehend beschrieben aus- und weitergebildet werden kann, wobei die Eingangsnabe der Klauenkupplung mit der Antriebswelle verbindbar ist oder einstückig mit der Antriebswelle ausgeführt ist und die Ausgangsnabe der Klauenkupplung mit dem Drehschwingungsdämpfer verbunden ist oder einstückig mit einem Eingangsflansch des Drehschwingungsdämpfers ausgeführt ist. Der Eingangsflansch kann insbesondere die Primärmasse eines Zweimassenschwungrads ausbilden, die über eine Bogenfeder mit einer Sekundärmasse begrenzt verdrehbar zur Dämpfung von Drehschwingungen gekoppelt ist. Bei einer geringen Bauteileanzahl kann eine einfache und schnelle Verbindung der Getriebekupplung mit der Antriebswelle erreicht werden. Dadurch ist eine einfache Koppelung der Antriebswelle eines Kraftfahrzeugs mit der Getriebekupplung ermöglicht.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Figur 1:: eine schematische axiale Querschnittdarstellung einer Klauenkupplung und
- Figur 2:: eine schematische perspektivische Schnittansicht des Sperrkörpers in der Klauenkupplung der Fig. 1.

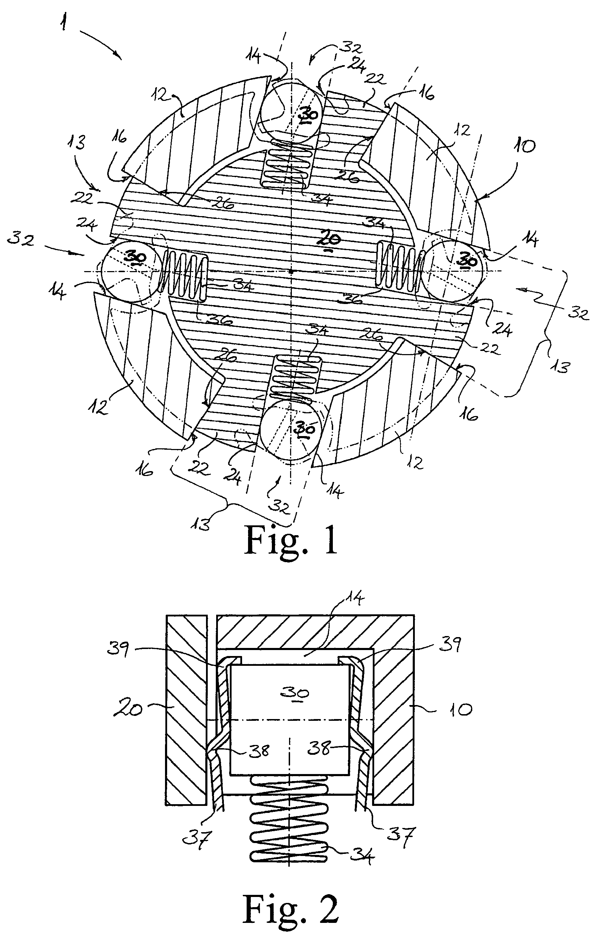

Die in Figur 1 dargestellte Klauenkupplung 1 weist eine Eingangsnabe 10 zum Einleiten eines Drehmoments auf, welche mit der Kurbelwelle eines Kraftfahrzeugmotors (nicht gezeigt) verbindbar ist. Die Eingangsnabe 10 umfasst mehrere, um ihren Umfang verteilte, axial hervorstehende Eingangselementen 12 zur Übertragung des Drehmoments in Umfangsrichtung. Die Eingangselemente 12 sind in diesem Beispiel als vier gekrümmter Segmente am Ende der Eingangsnabe beziehungsweise der einen Klauenhälfte 10 ausgebildet, zwischen denen eine jeweilige Ausnehmung 13 vorgesehen ist. Ferner weist die in Fig. 1 dargestellte Klauenkupplung 1 eine Ausgangsnabe 20 zum Ausleiten des Drehmoments über eine entsprechende Anzahl von Ausgangselementen 22, die sich radial in die Ausnehmungen 13 zwischen den Eingangselementen 12 erstrecken. Somit bildet die Ausgangsnabe 20 eine zweite Klauenhälfte der Kupplung 1, welche beispielsweise an einem Eingangsflansch eines Zweimassenschwungrads angeordnet beziehungsweise ausgebildet sein kann.

Ferner mit Bezug auf die in Figur 1 dargestellte Klauenkupplung 1 liegt ein Sperrkörper 30 in Gestalt einer zylinderförmigen Rolle zwischen gegenüberliegenden Flanken 14, 24 der benachbarten Paare der Eingangs- und Ausgangselemente 12, 22. Diese Flanken 14, 24 der jeweiligen Eingangs- und Ausgangselementen 12, 22 bilden einen jeweiligen Spalt oder Kanal 32, der sich in radialer Richtung nach außen hin verjüngt. In diesem Zusammenhang verläuft die im Wesentliche ebene Flanke 14 des Eingangselements 12 in einem Spitzenwinkel zur sich im Wesentlichen radial ersteckenden Flanke 24 des Ausgangselements 22, so dass sich jede Sperrkörper beziehungsweise Rolle 30 zwischen diesen Flanken 14, 24 unter Vorspannung einer Feder 34 in radialer Richtung nach außen hin verkeilt und gegen die Flanken 14, 24 drückt und damit eine spielfreie Verbindung in Umfangsrichtung zwischen den Eingangsund Ausgangsnaben beziehungsweise Klauenhälften 10, 20 erzeugt.

Mit weiterem Bezug auf Figur 1 weisen die Eingangs- und Ausgangselemente 12, 22 jeweilige Anschlagsflächen 16, 26 auf, die durch das Einwirken des Sperrkörpers 30 in Kontakt miteinander zur Übertragung des Drehmoments kommen. In diesem Ausführungsbeispiel liegt die Flanke 14 jedes Eingangselements 12, gegen die der Sperrkörper 30 drückt, auf der Auslaufseite des Eingangselements 12 bezüglich der Drehrichtung, so dass der kleine Kontaktbereich - also, nahezu Linienkontaktbereich - jeder zylindrischen Rolle 30 mit den Flanken 14, 24 nicht der unmittelbaren Übertragung des Drehmoments vom Eingangselement zum jeweiligen Ausgangselement dient.

Mit Bezug nun auch auf die Figur 2 ist jeder Sperrkörper beziehungsweise jede Rolle 30 mit einer jeweiligen Feder 34, die in einer Aussparung 36 gelagert ist, radial nach außen vorgespannt. Bei der Montage ist jeder Sperrkörper 30 zusammen mit der federbasierten Vorspannung 34 vorzugsweise auf der Ausgangsseite, d.h. vorzugsweise im Flansch des Zweimassenschwungrads, angeordnet. Beim Zusammenfügen der beiden Klauenhälften 10, 20 wird eine (Blech-) Halterung 37 für die Rollen 30 an den seitlichen Wippen 38 derart zusammengedrückt, dass sich die radial äußeren Enden 39 der Halterung 37 seitlich von den Rollen 30 lösen. Somit werden die Rollen 30 freigegeben, so dass sie sich unter Vorspannung der Feder 34 radial nach außen in die jeweiligen Kanäle 32 bewegen können. D.h. nach dem Zusammenbau der Kupplung1 bewegen die sich entspannenden Feder 34 die zylinderförmigen Sperrkörper 30, die beispielsweise auch als Kugeln ausgebildet werden können, in den sich verjüngenden Verriegelungskanälen 32 in radialer Richtung nach außen. Hierdurch erfolgt eine im Wesentlichen spielfreie Verriegelung, wobei die Wirkung der Verriegelung im Betrieb durch die auf die Sperrkörper 30 wirkende Fliehkraft weiter ansteigt.

Durch die zylinderförmigen Rollen 30 ist es daher möglich das Spiel der beiden Klauenhälften 10, 20 annähernd spielfrei zu gestalten. Dies hat den Vorteil dass die Verbindung nicht zum "rasseln" neigt und dass die Toleranzen der einzelnen Klauenhälften zueinander unkritisch sind, da die Sperrkörper beziehungsweise Rollen 30 durch die konischen Flanke 14, 24 die Fertigungstoleranzen überbrücken. Dadurch ist es möglich einen größeren Toleranzunterschied zu akzeptieren und die "konischen" Flanken 14, 24 können entsprechend der möglichen Federkräfte ausgelegt werden. Die "Verriegelung" erfolgt bei der Montage. Hier werden beim Fügen von Motor und Getriebe die Federelemente 34 betätigt - gedrückt - und durch ein Abrollen über die an der Rolle aufsitzende Flanken 14, 24 freigegeben. Durch die Federkräfte werden dann die Zylinderrollen nach außen geschoben und gleichen somit das unterschiedliche Spiel zwischen den beiden Klauen aus.

Mit Hilfe der oben aufgezeigten Konstruktion ist es durch die Anordnung der Rolle 30 und Federn 34 eine Kurbelwellenanbindung mit folgenden Vorteilen zu erhalten: (i) eine spielfreie Verbindung über das gesamte Drehzahlband mit hundert prozentiger Tragfähigkeit - also, prozentual tragende Anteil im Schub (oder Zug), (ii) ein Ausgleich von Fertigungstoleranzen und (iii) eine lösbare Verbindung. Insbesondere ist es durch diese Art der Anbindung möglich, ein Getriebe mit einer sich im Nassraum befindlichen Dämpfereinheit zu konstruieren und im Wesentlichen spielfrei lösbar an die Kurbelwelle anzubinden. Diese Klauenkupplung 1 kann bei allen Getrieben (Automatik, NDK, CVT) mit nasser Dämpfereinheit eingesetzt werden.

### Bezugszeichenliste

- 1: Klauenkupplung
- 10: Eingangsnabe
- 12: Eingangselemente
- 13: Ausnehmungen in der Eingangsnabe
- 14: Flanken der Eingangselemente
- 16: Anschlagfläche der Eingangselemente
- 20: Ausgangsnabe
- 22: Ausgangselemente
- 24: Flanken der Ausgangselemente
- 26: Anschlagsfläche der Ausgangselemente
- 30: Sperrkörper
- 32: Verriegelungsspalt beziehungsweise -kanal
- 34: Feder
- 36: Aussparungen
- 37: Halterung
- 38: Wippe
- 39: Enden der Halterung

## Patentansprüche

1. Klauenkupplung (1) zur Verbindung einer Antriebswelle eines Kraftfahrzeugmotors mit einer im Antriebsstrang nachgelagerten Baueinheit, mit
einer mit der Antriebswelle verbindbaren Eingangsnabe (10) zum Einleiten eines Drehmoments,
einer mit der nachgelagerten Baueinheit verbindbaren Ausgangsnabe (20) zum Ausleiten des Drehmoments,
wobei die Eingangsnabe (10) mindestens ein Eingangselement (12) zur Übertragung des Drehmoments in Umfangsrichtung auf mindestens ein Ausgangselement (22) der Ausgangsnabe (20) aufweist, und
wobei ein Sperrkörper (30) zwischen gegenüberliegenden Flanken (14, 24) der Eingangs- und Ausgangselemente (12, 22) drückt, um eine spielfreie Verbindung in Umfangsrichtung zwischen der Eingangsnabe (10) und der Ausgangsnabe (20) zu erzeugen,
wobei die gegenüberliegenden Flanken (14, 24) der Eingangs- und Ausgangselemente (12, 22) einen Spalt oder Kanal (32) bilden, der sich in radialer Richtung nach außen hin verjüngt,
wobei der Sperrkörper (30) in radialer Richtung nach außen vorgespannt ist, vorzugsweise mittels einer Feder (34), so dass der Sperrkörper (30) gegen die gegenüberliegenden Flanken (14, 24) der Eingangs- und Ausgangselemente (12, 22) drückt,
**dadurch gekennzeichnet, dass**
der Sperrkörper (30) eine in Umfangsrichtung weisende konkave, vorzugsweise runde oder zylindrische, Kontur zum Anliegen an den gegenüberliegenden Flanken (14, 24) der Eingangs- und Ausgangselemente (12, 22) aufweist.

2. Klauenkupplung nach Anspruch 1 **dadurch gekennzeichnet, dass** die Eingangsnabe (10) eine Mehrzahl von Eingangselementen (12) um ihren Umfang aufweist, von denen jedes das Drehmoment in Umfangsrichtung auf ein jeweiliges Ausgangselement (22) überträgt, wobei ein Sperrkörper (30) zwischen jedem benachbarten Paar der Eingangs- und Ausgangselemente (12, 22) vorgesehen ist.

3. Klauenkupplung nach einem der Ansprüche 1 oder 2, **dadurch gekennzeichnet, dass** die Eingangs- und Ausgangselemente (12, 22) jeweilige Anschlagsflächen (16, 26) aufweisen, die in Drehrichtung durch das Einwirken des Sperrkörpers (30) in Kontakt miteinander zur Übertragung des Drehmoments kommen, wobei die Flanke (14) des Eingangselements (12), gegen welche der Sperrkörper (30) drückt, auf der Auslaufseite des Eingangselements (12) bezüglich der Drehrichtung liegt.

4. Klauenkupplung nach einem der Ansprüche 1 bis 3, **dadurch gekennzeichnet, dass** das mindestens eine Ausgangselement (22) der Ausgangsnabe (20) in einer jeweiligen Ausnehmung (13) der Eingangsnabe (10) liegt, wobei die Flanke (14) des Eingangselements (12) die Ausnehmung (13) zum Teil abgrenzt.

5. Klauenkupplung nach Anspruch 4, **dadurch gekennzeichnet, dass** das mindestens eine Ausgangselement (22) zumindest teilweise radial nach außen in die jeweilige Ausnehmung (13) hineinragt.

6. Kupplungsaggregat zur Übertragung eines Drehmoments von einer Antriebswelle eines Kraftfahrzeugmotors zu mindestens einer Getriebeeingangswelle eines Kraftfahrzeuggetriebes mit einer Getriebekupplung, insbesondere Doppelkupplung, und einer Klauenkupplung (1) nach einem der Ansprüche 1 bis 5, wobei die Eingangsnabe (10) der Klauenkupplung (1) mit der Antriebswelle verbindbar ist oder einstückig mit der Antriebswelle ausgeführt ist und die Ausgangsnabe (20) der Klauenkupplung (1) mit der Getriebekupplung verbunden ist oder einstückig mit einem Eingangsflansch der Getriebekupplung ausgeführt ist.

7. Kupplungsaggregat zur Übertragung eines Drehmoments von einer Antriebswelle eines Kraftfahrzeugmotors zu mindestens einer Getriebeeingangswelle eines Kraftfahrzeuggetriebes mit einer Getriebekupplung, insbesondere Doppelkupplung, einem mit der Getriebekupplung verbundenen Drehschwingungsdämpfer, insbesondere Zweimassenschwungrad, und einer Klauenkupplung (1) nach einem der Ansprüche 1 bis 5, wobei die Eingangsnabe (10) der Klauenkupplung (1) mit der Antriebswelle verbindbar ist oder einstückig mit der Antriebswelle ausgeführt ist und die Ausgangsnabe (20) der Klauenkupplung (1) mit dem Drehschwingungsdämpfer verbunden ist oder einstückig mit einem Eingangsflansch des Drehschwingungsdämpfers ausgeführt ist.

## Claims

1. Jaw clutch (1) for connecting a drive shaft of a motor vehicle engine to a unit which is mounted downstream in the drive train, having
an input hub (10) which can be connected to the drive shaft in order to input a torque,
an output hub (20) which can be connected to the downstream unit in order to output the torque,
the input hub (10) having at least one input element (12) for transmitting the torque in the circumferential direction to at least one output element (22) of the output hub (20), and
a locking body (30) pressing between opposite flanks (14, 24) of the input and output elements (12, 22), in order to produce a play-free connection in the circumferential direction between the input hub (10) and the output hub (20),
the opposite flanks (14, 24) of the input and output elements (12, 22) forming a gap or channel (32) which tapers outwards in the radial direction,
the locking body (30) being prestressed outwards in the radial direction, preferably by means of a spring (34), with the result that the locking body (30) presses against the opposite flanks (14, 24) of the input and output elements (12, 22),
**characterized in that**
the locking body (30) has a concave, preferably round or cylindrical, contour which points in the circumferential direction for bearing against the opposite flanks (14, 24) of the input and output elements (12, 22).

2. Jaw clutch according to Claim 1, **characterized in that** the input hub (10) has a plurality of input elements (12) about its circumference, of which each transmits the torque in the circumferential direction to a respective output element (22), a locking body (30) being provided between each adjacent pair of the input and output elements (12, 22).

3. Jaw clutch according to either of Claims 1 and 2, **characterized in that** the input and output elements (12, 22) have respective stop faces (16, 26) which come into contact with one another in the rotational direction by way of the action of the locking body (30) in order to transmit the torque, the flank (14) of the input element (12), against which the locking body (30) presses, lying on the trailing side of the input element (12) with regard to the rotational direction.

4. Jaw clutch according to one of Claims 1 to 3, **characterized in that** the at least one output element (22) of the output hub (20) lies in a respective recess (13) of the input hub (10), the flank (14) of the input element (12) partially delimiting the recess (13).

5. Jaw clutch according to Claim 4, **characterized in that** the at least one output element (22) protrudes at least partially radially outwards into the respective recess (13).

6. Clutch assembly for transmitting a torque from a drive shaft of a motor vehicle engine to at least one transmission input shaft of a motor vehicle transmission with a transmission clutch, in particular a double clutch, and a jaw clutch (1) according to one of Claims 1 to 5, the input hub (10) of the jaw clutch (1) being capable of being connected to the drive shaft or being configured in one piece with the drive shaft, and the output hub (20) of the jaw clutch (1) being connected to the transmission clutch or being configured in one piece with an input flange of the transmission clutch.

7. Clutch assembly for transmitting a torque from a drive shaft of a motor vehicle engine to at least one transmission input shaft of a motor vehicle transmission with a transmission clutch, in particular a double clutch, a torsional vibration damper which is connected to the transmission clutch, in particular a dual-mass flywheel, and a jaw clutch (1) according to one of Claims 1 to 5, the input hub (10) of the jaw clutch (1) being capable of being connected to the drive shaft or being configured in one piece with the drive shaft, and the output hub (20) of the jaw clutch (1) being connected to the torsional vibration damper or being configured in one piece with an input flange of the torsional vibration damper.

## Revendications

1. Embrayage à crabots (1) pour la connexion d'un arbre d'entraînement d'un moteur à combustion interne à une unité structurelle montée en aval de la chaîne cinématique, comprenant :
un moyeu d'entrée (10) pouvant être connecté à l'arbre d'entraînement pour l'introduction d'un couple,
un moyeu de sortie (20) pouvant être connecté à l'unité structurelle montée en aval pour la sortie du couple,
le moyeu d'entrée (10) présentant au moins un élément d'entrée (12) pour transmettre le couple dans la direction périphérique à au moins un élément de sortie (22) du moyeu de sortie (20), et
un corps de verrouillage (30) exerçant une pression entre des flancs opposés (14, 24) des éléments d'entrée et de sortie (12, 22), afin de générer une connexion sans jeu dans la direction périphérique entre le moyeu d'entrée (10) et le moyeu de sortie (20),
les flancs opposés (14, 24) des éléments d'entrée et de sortie (12, 22) formant une fente ou un canal (32) qui se rétrécit vers l'extérieur dans la direction radiale,
le corps de verrouillage (30) étant précontraint vers l'extérieur dans la direction radiale, de préférence au moyen d'un ressort (34), de telle sorte que le corps de verrouillage (30) presse contre les flancs opposés (14, 24) des éléments d'entrée et de sortie (12, 22),
**caractérisé en ce que**
le corps de verrouillage (30) présente un contour concave, de préférence cylindrique, orienté dans la direction périphérique, pour s'appliquer contre les flancs opposés (14, 24) des éléments d'entrée et de sortie (12, 22).

2. Embrayage à crabots selon la revendication 1, **caractérisé en ce que** le moyeu d'entrée (10) présente une pluralité d'éléments d'entrée (12) autour de sa périphérie, chacun transmettant le couple dans la direction périphérique à un élément de sortie respectif (22), un corps de verrouillage (30) étant prévu entre chaque paire adjacente d'éléments d'entrée et de sortie (12, 22).

3. Embrayage à crabots selon l'une quelconque des revendications 1 ou 2, **caractérisé en ce que** les éléments d'entrée et de sortie (12, 22) présentent des surfaces de butée respectives (16, 26) qui viennent en contact l'une avec l'autre pour transmettre le couple dans le sens de rotation sous l'effet de l'action du corps de verrouillage (30), le flanc (14) de l'élément d'entrée (12) contre lequel presse le corps de verrouillage (30) étant situé sur le côté de sortie de l'élément d'entrée (12) par rapport au sens de rotation.

4. Embrayage à crabots selon l'une quelconque des revendications 1 à 3, **caractérisé en ce que** l'au moins un élément de sortie (22) du moyeu de sortie (20) est situé dans un évidement respectif (13) du moyeu d'entrée (10), le flanc (14) de l'élément d'entrée (12) limitant en partie l'évidement (13).

5. Embrayage à crabots selon la revendication 4, **caractérisé en ce que** l'au moins un élément de sortie (22) pénètre au moins en partie radialement vers l'extérieur dans l'évidement respectif (13).

6. Unité d'embrayage pour le transfert d'un couple d'un arbre d'entraînement d'un moteur à combustion interne à au moins un arbre d'entrée de transmission d'une transmission de véhicule automobile comprenant un embrayage de transmission, en particulier un double embrayage, et un embrayage à crabots (1) selon l'une quelconque des revendications 1 à 5, le moyeu d'entrée (10) de l'embrayage à crabots (1) pouvant être connecté à l'arbre d'entraînement ou étant réalisé d'une seule pièce avec l'arbre d'entraînement et le moyeu de sortie (20) de l'embrayage à crabots (1) étant connecté à l'embrayage de transmission ou étant réalisé d'une seule pièce avec une bride d'entrée de l'embrayage de transmission.

7. Unité d'embrayage pour le transfert d'un couple d'un arbre d'entraînement d'un moteur à combustion interne à au moins un arbre d'entrée de transmission d'une transmission de véhicule automobile comprenant un embrayage de transmission, en particulier un double embrayage, un amortisseur d'oscillations de torsion connecté à l'embrayage de transmission, en particulier un volant d'inertie à deux masses, et un embrayage à crabots (1) selon l'une quelconque des revendications 1 à 5, le moyeu d'entrée (10) de l'embrayage à crabots (1) pouvant être connecté à l'arbre d'entraînement ou étant réalisé d'une seule pièce avec l'arbre d'entraînement et le moyeu de sortie (20) de l'embrayage à crabots (1) étant connecté à l'amortisseur d'oscillations de torsion ou étant réalisé d'une seule pièce avec une bride d'entrée de l'amortisseur d'oscillations de torsion.
